# EUROPEAN PATENT SPECIFICATION

(11) **EP 4 201 768 B1**
(45) Date of publication and mention of the grant of the patent: **12.03.2025**
(21) Application number: 21217595.4
(22) Date of filing: 23.12.2021
(51) Int. Cl.: B60W 30/08, B60W 30/09, B60W 30/095

(54) **CONTROLLING A VEHICLE TO HAVE PREDICTABLE BEHAVIOR**
STEUERUNG EINES FAHRZEUGS FÜR VORHERSAGBARES VERHALTEN
COMMANDE D'UN VÉHICULE POUR AVOIR UN COMPORTEMENT PRÉVISIBLE

(43) Date of publication of application: 28.06.2023
(73) Proprietor: Volvo Autonomous Solutions AB, 405 08 Göteborg (SE)
(72) Inventor: SANDBLOM, Fredrik, 431 66 Mölndal (SE); HAGVALL, Linus, 418 74 Göteborg (SE)
(74) Representative: Zacco Sweden AB

(56) References cited:
- WO-A1-02/08010
- DE-A1- 102014 204 168
- DE-A1- 102017 103 700
- US-A1- 2017 210 383

## Description

The present invention relates to a method for controlling a vehicle to have predictable behaviour and to related aspects.

In particular but not exclusively, the invention relates to a method which enables an
ADS of a vehicle to make decisions at run-time that create independent sets of error-consequence classes such that the predicted consequences of the vehicle being involved in a traffic incident are easier to quantify. Whilst this is sub-optimal if an alternative to a traffic incident occurring is available, in some situations where there are no safe trajectories available for a vehicle to select from, the ability to assign the contribution of every type of incident to every type of consequence, with certainty has clear advantages. The described technology is mainly with respect to vehicles, for example, automated vehicles, which may be autonomous or semi-autonomous vehicles. Such vehicles may include heavy-duty vehicles, such as semi-trailer vehicles and trucks as well as other types of vehicles such as cars.

### BACKGROUND

German Patent Application DE102014204168 relates to a system for preventing evasive accidents. The system is designed to predict a travel path (111) of a vehicle (105), to detect an impending collision of the vehicle (105) with at least one collision object (101), and at least in the case of an impending collision with the collision object (101), to prevent a deviation of the vehicle (105) from the travel path (111). The travel path (111) can be calculated in advance such that a collision of the vehicle (105) with the collision object (101) occurs.

United States Patent Application US2017/210383 relates to a vehicle collision avoidance assist system, including: a forward obstacle detecting device; a lateral object detecting device; and a controller including an automatic braking control executing portion to execute an automatic braking control for permitting a brake apparatus to automatically operate, an avoidance control executing portion to execute, in addition to the automatic braking control, an avoidance control for permitting a steering apparatus to automatically operate, and an avoidance control prohibiting portion to prohibit execution of the avoidance control, wherein the avoidance control prohibiting portion prohibits execution of the avoidance control when the lateral object detecting device detects a lateral moving object that is moving on a lateral side of an own vehicle in the same direction as the own vehicle is travelling and there is a risk that the own vehicle and the lateral moving object will collide with each other if the avoidance control is executed.

International PCT Patent Application WO02/08010 relates to an automatic brake and steering system for a vehicle comprising a sensor device for detecting vehicle state variables and vehicle characteristic quantities in addition to environmental conditions. A regulating and control device are provided for adjusting the brakes and/or the steering of the vehicle. In order to carry out automatic obstacle avoidance manoeuvre with the utmost security, an alternative route (b) is determined when an obstacle (3) lies in the travel path. If a further obstacle (4) lies in the alternative route, a strategy for determining another alternative route is applied. If a collision-free alternative route cannot be found, a subsequent route (e) is chosen, where the difference (D S2) of the remaining stopping distance (sb) and the remaining distance (sh2) to the obstacles (5) is the shortest.

German Patent Application DE102017103700 relates to a method for automatically avoiding a collision (8) of a motor vehicle (1) with at least one vehicle-external object (2), comprising the steps: acquiring (V3) object data (3) relating to the at least one vehicle-external object (2) by means of a first sensor system (20) of the motor vehicle (1), acquiring (V1) vehicle data (10) relating to the motor vehicle (1) by means of a second sensor system (24) of the motor vehicle (1), determining (V5) the imminent collision (8) of the motor vehicle (1) with the at least one vehicle-external object (2) on the basis of the object data (3) and the vehicle data (10). In order to reduce the risk of a faulty intervention in the steering system of a motor vehicle, it is provided that a respective movement (7) of the at least one vehicle-external object (2) is modelled (V4) from the object data (3) for determining the imminent collision, and an intervention (V7, V7') in a steering system of the motor vehicle (1) in order to avoid the imminent collision of the motor vehicle (1) with the at least one vehicle-external object (2) only takes place if the respective movement (7) of the at least one vehicle-external object (2) is reliably determined or predicted according to a predefined criterion.

The disclosed technology seeks to mitigate, obviate, alleviate, or eliminate various issues known in the art which affect an autonomous vehicle experiencing a rare event which may lead to unexpected consequences if there are no safe trajectories for the vehicle to follow.

Run-time tactical decisions avoid incidents (**I**), and incidents can lead to consequences (**C**). The function that maps a particular incident to a consequence is random in the sense that consequences cannot always be correctly assessed. For example, a hazardous situation or incident may be classified as the most severe type if the probability for fatality is larger than 10%. An ADS configured to assess consequences which are limited by an explicit bound/promise is required to know all mappings **I_n -> {C_0, C_1, ... C_m}** (assuming there are 'n' types if incidents and 'm' types of consequences).

When arguing safety and compliance of an ADS to a safety norm, it is desirable to be able to predict that an ADS fulfils an explicit risk norm to a degree of confidence. In other words, there should be some way of explicitly expressing a bound for how many and how severe accidents that introduction of a particular ADS could lead to. In order to calculate the bound, it is important to be able to map which types of incidents can lead to which types of consequences. If there is no known association between a particular type of incident and one or more possible consequences of the incident, it is difficult to correctly estimate and quantify what the final outcome will be. Furthermore, there is likely to be a future requirement to know with a certain degree of confidence that any tactical decisions taken by an ADS will not unintentionally lead to unaccountable consequences before such an ADS is deployed in the field.

### SUMMARY STATEMENTS

Whilst the invention is defined by the accompanying claims, various aspects of the disclosed technology including the claimed technology are set out in this summary section with examples of some preferred embodiments and indications of possible technical benefits.

The disclosed technology generally relates to a computer-implemented method as defined by claim 1.

A decision to follow the current re-evaluated trajectory is then made possible removing one or more consequences of the occurrence of the event from the safety criteria used to re-evaluate the current trajectory whilst maintaining all other previous safety criteria. This allows the vehicles ADS to maintain the path of the current trajectory whilst possibly changing the behaviour of the vehicle along that path to slow it down. A first aspect of the disclosed technology comprises a computer-implemented method of controlling a vehicle to have predictable behaviour, the method comprising an automated driver system, ADS, of the vehicle performing determining there are no safe trajectories responsive to an occurrence of an unexpected event; and responsive to the determination, dynamically re-evaluating whether a current trajectory meets a current set of safety criteria, and determining the current re-evaluated trajectory path is to be maintained with the vehicle have a predictable behaviour by removing one or more consequences of the occurrence of the event from the safety criteria used to re-evaluate the current trajectory whilst maintaining all other previous safety criteria.

Advantageously, the method may prevent an ADS from making a tactical decision that leads to an over-representation of certain incidents when an unexpected event has already happened.

In some embodiments, the vehicle is a heavy-duty vehicle.

In some embodiments of the method, the method is executed by the vehicle ADS at run time, and the all other previous safety criteria comprise safety criteria from a previous ADS run-time epoch to the current ADS run-time epoch.

In some embodiments of the method, the one or more of the consequences of the occurrence of the event are pre-determined off-line.

In some embodiments of the method, the pre-determined one or more consequences are associated with a set of one or more predicted outcomes for a type of the unexpected event.
In some embodiments of the method, the set of predicted outcomes are associated with a set of rules for maintaining or changing the current trajectory.

In some embodiments of the method, removing the one or more consequences of the event when re-evaluating the safety criteria comprises using the set of rules associated with safe outcomes of the set of one or more predicted outcomes determined from information about the current trajectory in a previous instance of the ADS run-time.

In some embodiments of the method, responsive to determining there are no safe trajectories, the method further comprises the ADS reducing in run-time an available set of control options for a control system of the vehicle to an allowed set of options for the control system to exercise to control the vehicle 10 towards a predicted outcome.

In some embodiments of the method, exercising the reduced set of available control options causes the vehicle to continue along the current trajectory path with different predictable behaviour to predicted behaviour prior to the unexpected event.

In some embodiments of the method, the different predicted behaviour includes behaviour predicted to slow vehicle speed, the different predicted behaviour comprising one or more of breaking, slowing the engine by engaging a lower gear.

In some embodiments of the method, the ADS is configured to generate information, responsive to which the control system generates actuator signals to operate the vehicle.

In some embodiments of the method, re-evaluating the trajectory against subsequent safety criteria in a subsequent ADS run-time epoch results in the trajectory meeting the subsequent safety criteria.

In some embodiments of the method, the event is a type of isolated unexpected event.

Another, second, aspect of the invention comprises a control system of a vehicle including an automated driving system, ADS, the control system comprising
memory, computer program code, and one or more processors and/or processing circuitry, wherein the computer program code, when loaded from the memory and executed by the one or more processors and/or processing circuitry causes the control system to perform a method according to the first aspect.

Another, third, aspect of the invention comprises a vehicle configured with a control system according the second aspect.

Another, fourth, aspect of the invention comprises a computer program product comprising a computer-readable storage medium, wherein the computer-readable storage medium includes computer code, which when loaded and executed by one or more processors and/or processing circuitry of a control system of a vehicle, causes the control system to be configured to maintain predictable behaviour of the vehicle by performing a method according to any of the embodiments of the first aspect.

A fifth aspect of the disclosed technology comprises a computer program carrier carrying a computer program comprising computer-program code, which, when loaded from the computer program carrier and executed by one or more processors or processing circuitry of a vehicle having an automated driving system, causes the vehicle to implement a method according to the first aspect, wherein the computer program carrier is one of an electronic signal, optical signal, radio signal or computer-readable storage medium.

The disclosed aspects and embodiments may be combined with each other in any suitable manner which would be apparent to someone of ordinary skill in the art.

### BRIEF DESCRIPTION OF THE DRAWINGS

Some embodiments of the disclosed technology are described below with reference to the accompanying drawings which are by way of example only and in which:
Figure 1 schematically illustrates an example scenario at time t0 where a vehicle ADS has generated a plurality of trajectories;
Figure 2 schematically illustrates a runtime execution thread of the ADS of Figure 1;
Figure 3 schematically illustrates the example scenario of Figure 1 at a later time t1;
Figure 4 schematically illustrates the runtime execution thread of the ADS of Figure 2, at a later time t1;
Figure 5 schematically illustrates the example scenario of Figure 1 at a later time t2;
Figure 6 schematically illustrates the runtime execution thread of the ADS of Figure 2, at a later time t2;
Figure 7 schematically illustrates the example scenario of Figure 1 at a later time T;
Figure 8 schematically illustrates the runtime execution thread of the ADS of Figure 2, at a later time T;
Figure 9 shows an example embodiment of a method of controlling a vehicle to have predictable behaviour according the disclosed technology;
Figures 10A to 10E illustrate schematically an example scenario where a method of controlling a vehicle to have predictable behaviour according to the disclosed technology avoids an incident; and
Figure 11 illustrates schematically an example control system and ADS of an autonomous vehicle according to the disclosed technology.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Steps, whether explicitly referred to a such or if implicit, may be re-ordered or omitted if not essential to some of the disclosed embodiments. Like numbers in the drawings refer to like elements throughout.

As used herein, the singular forms "a", "an" and "the" are intended to include the plural forms as well, unless the context clearly indicates otherwise.

The disclosed technology allows errors to be identified at design-time which by design will not lead to certain incidents. Consider, for example, a scenario where an object rolls off a moving lorry towards a vehicle following behind the lorry. The object is on a collision course for the vehicle. When the vehicle detects the object, the ADS object-tracking software determines that the detection of an obstacle on the road based on its trajectory at that point and the trajectory of the vehicle can lead to a series of incidents describing collisions, however, due to the environmental constraints it cannot lead to road departures. In other words, the current trajectory the vehicle is following is no longer safe in the sense it will fail to meet all of the safety criteria when one or more collisions with the object have been taken into account. What if, however, there are no alternative safe trajectories available for the ADS of the vehicle to select, for example, if the vehicle is on a single-track elevated roadway such as a single-track bridge.

If a vehicle can safely departed from the road with limited or not consequences, then staying on the road and risking having a collision with the object is potentially sub-optimal. In other words, in such situations, if the predicted outcomes for trajectories where the vehicle did leave the road do not come to pass, the vehicle could have safely departed the road with a limited or no consequence. If the vehicle does not do this, in other words, if it turns out that one of the unavailable trajectories determined to be unsafe at the instance the object was detected later turns out to have been safe, it is important to understand why the vehicle rejected that trajectory and instead continued with its current trajectory despite this perhaps later leading to a possibly higher consequence. In other words, it may turn out that staying on course and hitting the object causes a huge traffic incident, and yet the vehicle could have safely avoided the incident with hindsight. However, if at the time of the incident the vehicle cannot predict such an outcome, then the outcome is unreachable as the vehicle does not have the capability to know with confidence that this outcome exists.

Embodiments of the disclosed technology allow events leading to an incident and the actions that an control unit of an autonomous vehicle having an ADS caused the vehicle to take to be analysed and considered from the perspective of what can be proven so that a vehicle can be is safe by definition based on meeting a risk norm. A technical benefit of the disclosed technology is that that it is easier to show with confidence that the risk norm is met by an ADS by simplifying the possible consequences of an error in the assumptions of the ADS (or of a "Driver"). Such assumptions include, but are not limited to, for example, assuming that an area is free because the vehicle has received this information from the perception system with sufficient integrity.

The disclosed technology meets the risk norm and so does not compromise safety of a vehicle, instead it allows a risk norm to be met by an ADS of a vehicle even when the ADS has to make potentially suboptimal decisions in critical situations such as those which may lead to a traffic incident for example. As a consequence, run-time decisions always take this risk in aspect and consequently use other means to minimize risk, such as lowering the allowed maximum speed.

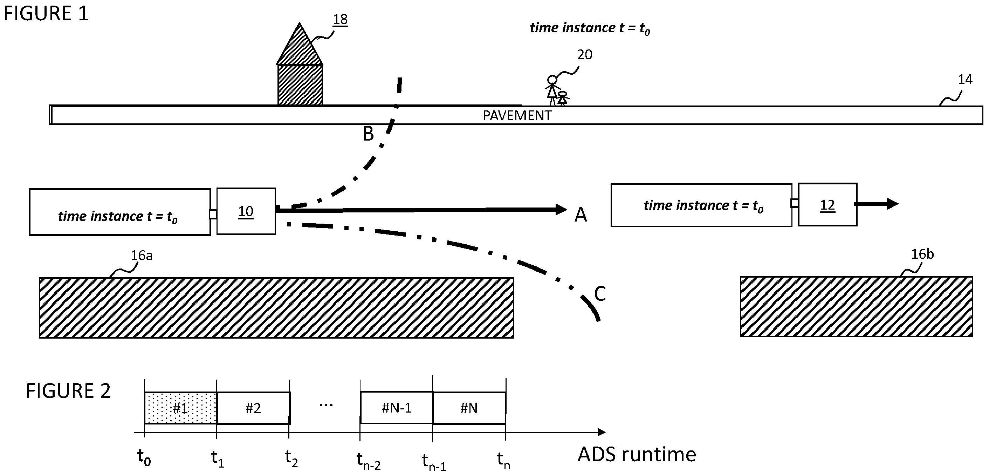

To better explain how the disclosed technology allows a vehicle having an ADS to be controlled to have predictable behaviour in the event of the ADS determining there are no safe trajectories to avoid an incident such as a collision with an object or the like, consider the scenario which is shown evolving in Figures 1, 3, 5, and 7 of the accompanying drawings.

Figure 1 schematically illustrates an example scenario at time t0 where an autonomous vehicle 10 whose trajectory is controlled by an automated driver system, ADS, has generated a plurality of trajectories shown as reference trajectory A and alternative trajectories B and C at a nominal point of time which shall be referred to as time t=t0.

In some embodiments, the vehicle is a heavy-duty vehicle. A modern heavy-duty vehicle may comprise a wide range of different physical devices, such as combustion engines, electric machines, friction brakes, regenerative brakes, shock absorbers, air bellows, and power steering pumps. These physical devices are commonly known as Motion Support Devices (MSD). The MSDs may be individually controllable, for instance such that friction brakes may be applied at one wheel, i.e., a negative torque, while another wheel on the vehicle, perhaps even on the same wheel axle, is simultaneously used to generate a positive torque by means of an electric machine.

In the context of the scenario shown in Figure 1, the vehicle 10 comprises a large, heavy-duty vehicle such as a truck or lorry or cab-and-trailer arrangement. The vehicle 10 is able to sense other objects in its surroundings, such as, for example, stationary objects 16a, 16b and 18 and moving objects 12 and 20. Examples of stationary objects 16a, 16b, 18 may include road-side kerbs or railings or the like and buildings. Moving objects may include other vehicles 12 and pedestrians 20.

Figure 2 schematically illustrates a runtime execution thread of the ADS of Figure 1 which shows the current ADS epoch #1 running from time t=t0 to time t=t1. This means that any incidents which occur after t0 up to and including t1 will be assigned to epoch #1. At time t0, the start of the current run-time epoch, the ADS of the vehicle is able to determine the current position of the pedestrians shown as pedestrians 20 in Figure 1, and, assuming the ADS has been tracking the movement of the pedestrians in previous epochs, the ADS is also able to make a prediction as to where the pedestrians will be at the time t1, the start of the next time epoch #2 of the ADS run-time.

Those of ordinary skill in the art will realise that the time labels #1 for the current epoch and the time labels t0 and t1 are merely to allow for the sequence of events leading up to a later incident to be better understood from the accompanying drawings.

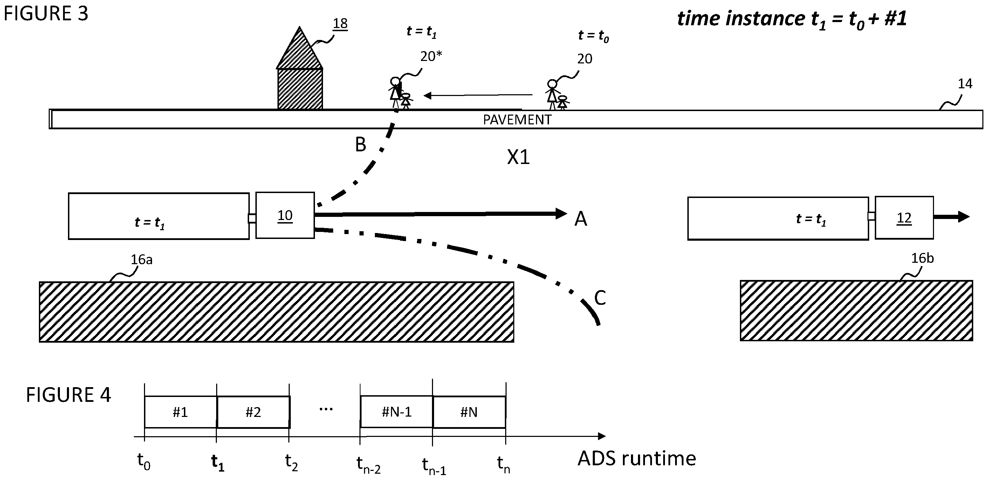

Figure 3 schematically illustrates the example scenario of Figure 1 at a later time t1, the start of the second run-time epoch of the ADS. In Figure 3, like elements to those of Figure 1 retain their numbering scheme. In the example scenario of Figure 3, the vehicle 10 has advanced along trajectory A, trajectory C remains a safe available trajectory but, as the pedestrians 20 have now moved to a new position, shown as 20* in Figure 3, trajectory B is no longer safe and so is an unavailable alternative trajectory for the vehicle ADS to select if it needs to change trajectory.

Figure 4 schematically illustrates the runtime execution thread of the ADS of Figure 2, at a later time t1, showing how the execution epoch starting with t1 lasts for a duration, in other words for a time-interval #2, after which the next time epoch #3 begins at time t=t2.

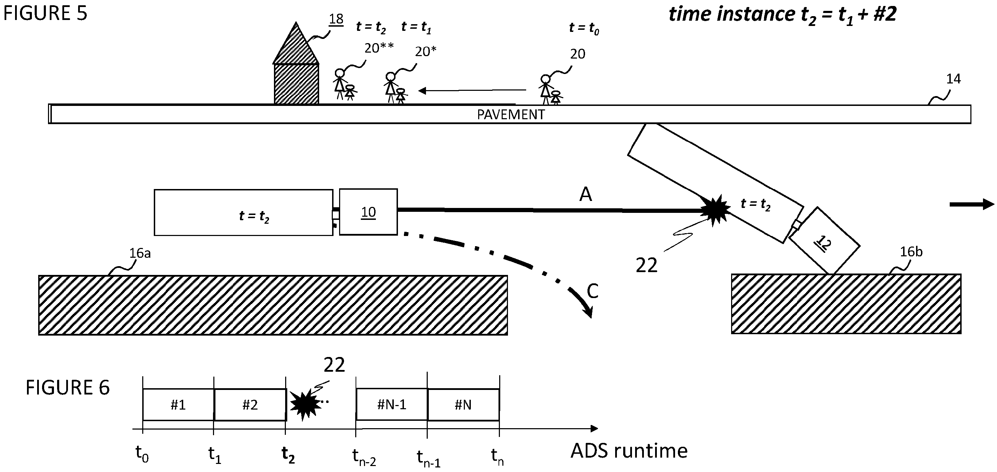

Figure 5 schematically illustrates the example scenario of Figure 1 at a later time t2, the start of the next epoch of the ADS execution thread. In Figure 5, the pedestrians have moved on, but trajectory B is no longer available as the vehicle 10 has advanced along the reference trajectory A beyond the point where it could switch to trajectory B. This means that when the vehicle predicts an incident 22 if the current trajectory A is maintained, the vehicle ADS assesses its safe available trajectories, and determines that the vehicle should switch to trajectory C.

Figure 6 schematically illustrates the runtime execution thread of the ADS of Figure 2, at a later time t2 showing the occurrence of the incident in the third epoch which starts with time t2.

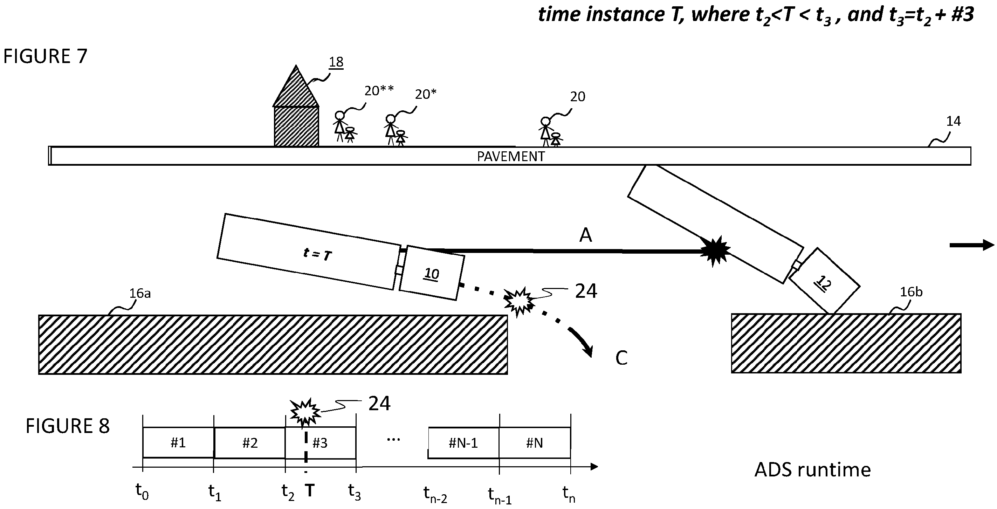

Figure 7 schematically illustrates the example scenario of Figure 1 at a later time T in the third epoch of the ADS runtime execution thread, where unexpected incident 24 occurs. Here the incident is unexpected in the sense that the ADS could not predict in a previous time epoch that the event would occur to any useful degree. As shown in Figure 7, the event occurs before the start of the next ADS epoch and the outcome of the event is predicted to be a collision at a time t>T.

Figure 8 schematically illustrates the runtime execution thread of the ADS of Figure 2, at the later time T.

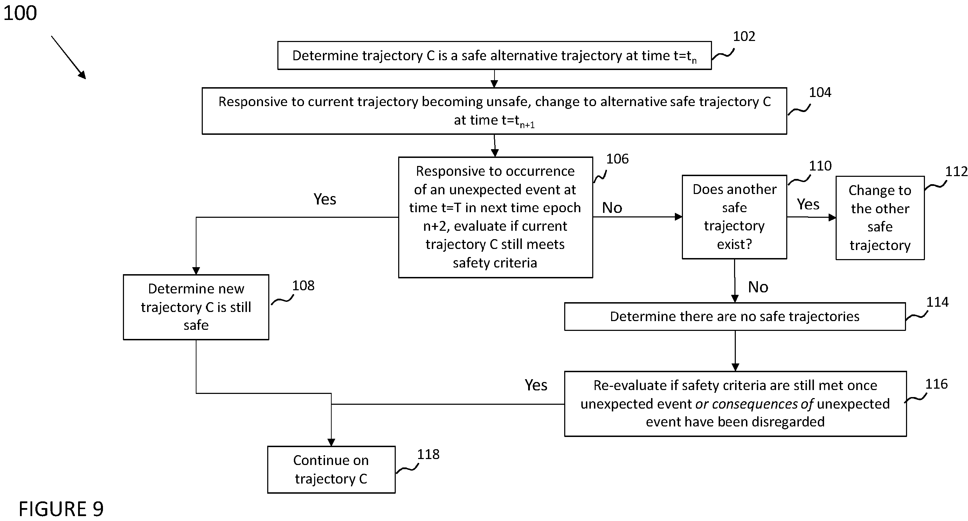

At time T, the vehicle ADS is configured according to the invention to perform a method 100 which enables the subsequent behaviour of the vehicle 10 to be predictable behaviour. As shown in Figure 9, the method 100 comprises first determining 102 a trajectory, C, is a safe alternative trajectory at time t=tn (this is equivalent to time t=t0 in Figure 1, where n=0). Responsive to current trajectory, A, becoming unsafe, the ADS signals the vehicle's control unit, and the vehicle control unit generates actuator commands to cause the vehicle to change 104 to alternative safe trajectory C at time t=tₙ₊₁.

However, at time =T, responsive to occurrence of an unexpected event at time t=T in next time epoch n+2, the ADS evaluates 106 if current trajectory C still meets safety criteria to be selected as an available trajectory. If the new trajectory C is determined 108 to still be safe, then the vehicle continues 118 along trajectory C. If, however, responsive to the occurrence of the unexpected event at time t=T in next time epoch n+2, the current trajectory C is initially evaluated to no longer meet safety criteria, the ADS will check 110 if another safe trajectory exists, and if it does, it will change 112 to the other safe trajectory. If, however, the ADS determines 114 there are no safe trajectories, the ADS is configured to re-evaluate if the safety criteria are still met once the unexpected event or one or more consequences of the unexpected event have been disregarded. This allows the ADS to continue to regard the current trajectory C as a safe trajectory which enables the ADS to signal to the control unit to maintain an unsafe trajectory such as the current unsafe trajectory C on basis that trajectory C was safe in the previous instance/ runtime epoch when t=tn+1).

Some embodiments of the method 100 executed by the ADS of the vehicle 10 accordingly cause the vehicle 10 to have predictable behaviour by determining (see Figure 9, 114) there are no safe trajectories responsive to an occurrence of an unexpected event, and, responsive to the occurrence of the unexpected event, dynamically re-evaluating (see Figure 9, 116) whether a current trajectory meets a current set of safety criteria. The method then determines the current re-evaluated trajectory is to be maintained with the vehicle have a predictable behaviour by removing one or more consequences of the occurrence of the event from the safety criteria used to re-evaluate the current trajectory whilst maintaining all other previous safety criteria.

The method 100 is executed by the vehicle ADS at run time. In some embodiments, the other previous safety criteria comprise safety criteria from a previous ADS run-time epoch to the current ADS run-time epoch, for example, the safety criteria which were used to evaluate the current trajectory selected in the previous ADS run-time epoch.

Although method 100 is performed by the ADS dynamically, in other words, when the ADS is executing, the one or more of the consequences of the occurrence of the event are pre-determined off-line in some embodiments. The consequences accordingly may be determined remotely, for example, by a remoter server such as a back-office server managing the autonomous vehicle 10.

The pre-determined one or more consequences are associated with a set of one or more predicted outcomes for a type of the unexpected event in some embodiments of the method. For example, if an unexpected event is a road collapse, a predicted outcome may be to fall into a hole. As another example, if an unexpected event is a tree falling over the road, a predicted outcome may be to run into the fallen tree

In some embodiments, the set of predicted outcomes are associated with a set of rules for maintaining or changing the current trajectory.

In some embodiments, the method removes the one or more consequences of the event when re-evaluating the safety criteria by using the set of rules associated with safe outcomes of the set of one or more predicted outcomes determined from information about the current trajectory in a previous instance of the ADS run-time.

In some embodiments, responsive to determining there are no safe trajectories, the method further comprises reducing in run-time an available set of control option s for the ADS of the vehicle to an allowed set of options for the ADS to exercise to control the vehicle towards a predicted outcome.

In some embodiments, exercising the reduced set of available control options causes the vehicle to continue along the current trajectory with different predictable behaviour to predicted behaviour prior to the unexpected event.

In some embodiments, the different predicted behaviour includes behaviour predicted to slow the vehicle speed. For example, the different predicted behaviour may include actions such as breaking, slowing the engine by engaging a lower gear, and/or swerving from side to side for example.

In some embodiments, the ADS is configured to generate information, responsive to which the control system generates actuator signals to operate the vehicle

In some embodiments, re-evaluating the trajectory against subsequent safety criteria in a subsequent ADS run-time epoch results in the trajectory meeting the subsequent safety criteria.

In some embodiments, the unexpected event is a type of isolated unexpected event, in other words, the ADS assumes that the event which occurs at time T is not part of a chain of events, which may last for longer than a particular runtime epoch.

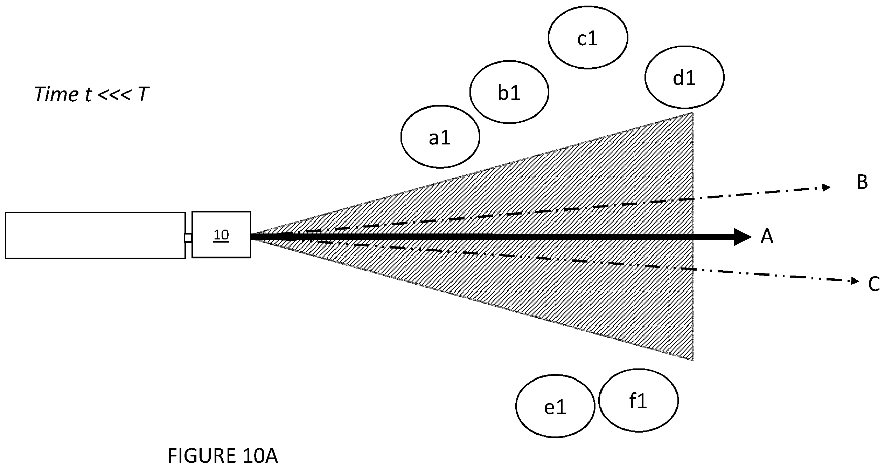

Figures 10A to 10E illustrate schematically an example scenario where a method of controlling a vehicle to have predictable behaviour according to the disclosed technology which avoids an incident after an unexpected event has occurred at time T. Figures 10A to 10E are particularly simplified versions of a scenario where an incident could occur.

In Figure 10A, which is at some time t <<<T, for example, in a previous epoch of the ADS run-time instance to the epoch prior to the epoch prior to the epoch when an unexpected event occurs (which is a t = T), the ADS of an autonomous vehicle 10 has determined that there are three available trajectories, the current reference trajectory A which is being followed and two alternative trajectories B and C. All three trajectories are assessed as safe trajectories which, for example, lie within a zone of safety within which there are no moving objects. Moving objects shown at positions a1, b1, c1, d1, e1, or f1 in Figure 10A are accordingly outside the zone of safety.

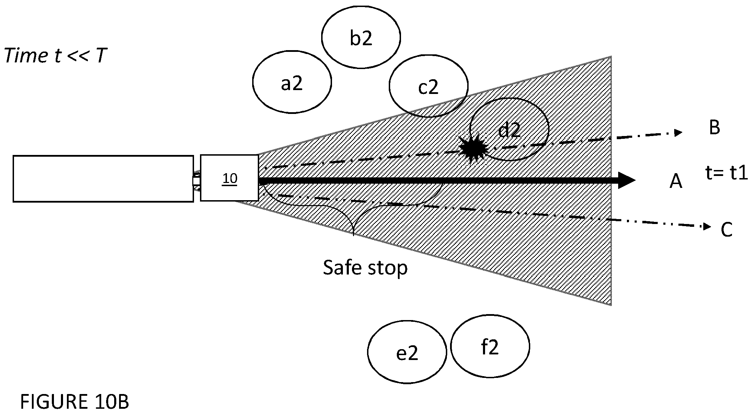

In Figure 10B, at a later point in time, t <<T for example, in the next run-time epoch of the ADS, object d has moved to position d2. The ADS of vehicle 10 determines the presence of object D at location d2 within the zone of object exclusion renders trajectory B unsafe when it assesses the outcomes of switching to trajectory B in that run-time epoch (t=t1). Along the current reference trajectory A however, the vehicle could do an emergency stop to avoid impacting object D and location d2. Accordingly, trajectory A and the alternative trajectory C are still determined to be safe at time epoch t=t1.

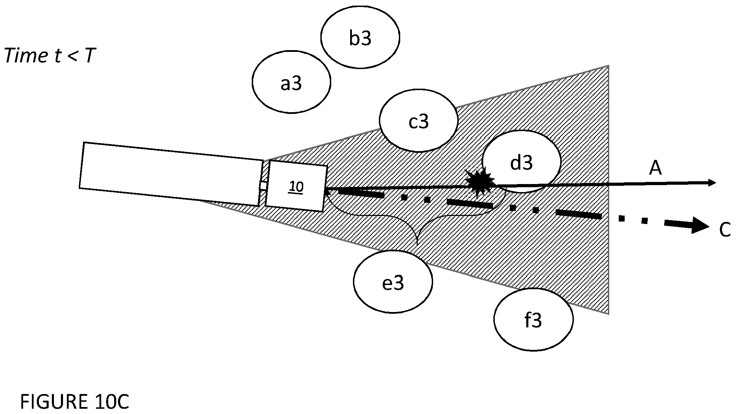

At a later point in time, for example, at time t <T in the previous epoch to the current epoch when the unexpected event occurs, , the object D has unexpectedly moved to location d3, as shown in Figure 10C, which is before the vehicle 10 can safely stop. The ADS of the vehicle will reassess the safety criteria for trajectory A and when it does so, will switch the vehicle to follow trajectory C, which is still determined to be safe at that time t.

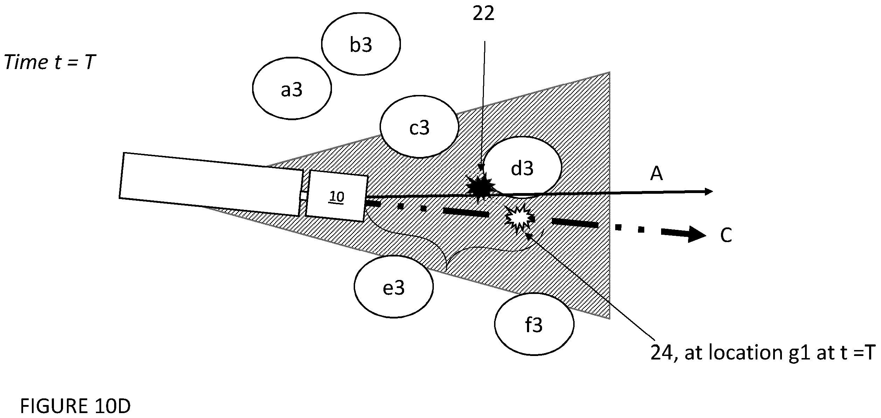

Figure 10D shows the scenario, at time t = T in the current ADS run-time epoch, an unexpected event occurs along trajectory C at location g1. Such an unpredictable event occurrence should be very rare indeed but may happen. It could, for example, be anything from a drone, bird or aeroplane part falling from the sky to something falling off the back of a lorry to a tree falling in front of the road. RE. At the time when the unexpected event occurs (at t=T) the event is a location g1 which is before the vehicle can stop on trajectory C. The ADS may not be able at time t=T to predict of the unexpected event is associated with a stationary or moving object. In such a scenario, when the ADS reassesses trajectory C against the safety criteria to assess if trajectory C is safe to follow after time T, i.e. when t>T, trajectory C will fail if the consequences of continuing to follow trajectory C are taken into account.

At this point in time, i.e. at time t=T, although essentially as a slightly later time responsive to the event being detected at time T, the ADS of the vehicle will perform an embodiment of method 100, for example, it will determine (114) there are no safe available existing trajectories responsive to an occurrence of the unexpected event at g1. It will then, responsive to the occurrence of the unexpected event, dynamically re-evaluate (116) whether a current trajectory, in this case trajectory C meets a current set of safety criteria. If not, then it will determine if the current re-evaluated trajectory is to be maintained by removing one or more consequences of the occurrence of the event from the safety criteria used to re-evaluate the current trajectory whilst maintaining all other previous safety criteria. This results in the vehicle maintaining trajectory C, which was previously determined to be unsafe. The result is the vehicle continues to have a predictable behaviour, and the control unit of the vehicle can take other actions to slow or stop the vehicle, even though at time t=T these are predicted to lead to a traffic incident, in other words, at time t=T the vehicle is predicted to continue on its collision course with the object associated with unexpected event at g1.

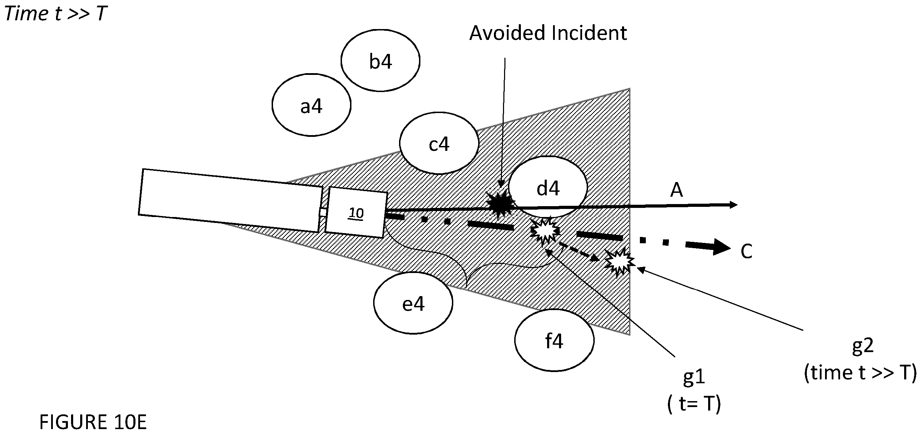

Figure 10E shows schematically a positive outcome of performing method 100 could be at a time t >T or t>>T, in other words at a time somewhat later than the epoch for which the ADS made the tactical decision to continue along trajectory C, as it turns out, no collision along trajectory C with the unexpected object occurs. In this scenario, the tactical decision by the ADS to continue along the trajectory had a safe outcome. For example, the unexpected object which appeared along the path of trajectory C at position g1 in the illustrated scenario is now at position g2 at time t>>T, so although this was unexpected at the point in time t > T where the ADS made the tactical decision to continue along trajectory C.

Advantageously, by continuing to follow trajectory C based on the assumption that as it was safe at a previous instance in time, there is a possibility that it may be the best choice at time t=T of trajectory to continue on at that point in time, and as a known trajectory, the behaviour of the vehicle is predictable.

In some embodiments, as mentioned above, although the ADS makes the tactical decision to continue along the path of trajectory C, the behaviour of the vehicle along trajectory C now differs as, in response to the unexpected event occurring, the ADS instructs the control unit of the vehicle to perhaps slow as quickly as possible, which may result in swerving from side to side, performing an emergency stop, changing down gear etc., etc.

Some, if not all, of the above embodiments of the method 100 may be implemented using computer program code which may be provided as software or hardcoded, for example, as a computer program product carried on as a signal to a vehicle for installation into the vehicle ADS, or on a device which connects to the ADS system of a vehicle. The computer program product may be accordingly installed in a factory-production environment in a vehicle or provided as an update to a vehicle's ADS software, which may be provided as an over the air, OTA, update or on a physical memory stick such as a portable memory device, such as a flash drive or usb stick or similar device.

In some embodiments, the computer program product comprises computercode which when loaded from memory and executed by one or more processors and/or processing circuitry 42 of a vehicle 10, causes the vehicle 10 to implement a method 100 for controlling a vehicle to have predictable behaviour according to any one of the disclosed method embodiments.

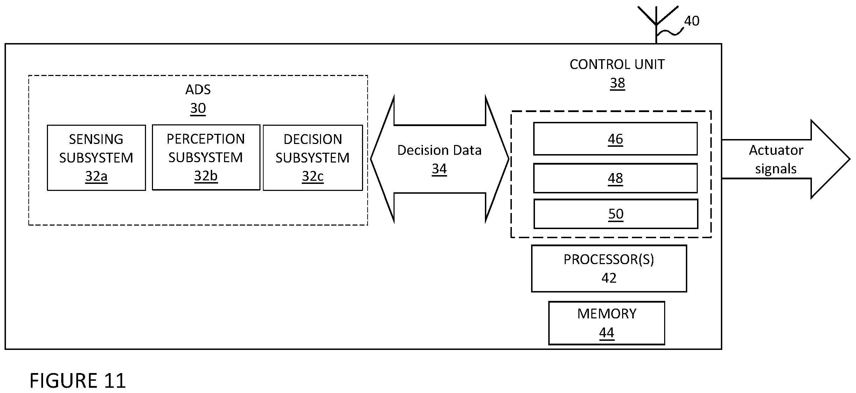

Figure 11 of the accompanying drawings shows a control system 38 of a vehicle 10 including an automated driving system, ADS, 30, where the control system 38 comprises memory 44, computer program code, and one or more processors and/or processing circuitry 42. The computer program code, when loaded from the memory 44 and executed by the one or more processors and/or processing circuitry 42, causes the control system to perform one of the disclosed embodiments of method 100. A vehicle comprising such a control system is thus also configured to perform one of the disclosed embodiments of method 100.

In some embodiments of the control system (and also in some embodiments of a vehicle including such a control system), a method embodiments such as one of the method embodiments described above may be at least partly implemented through one or more processors, such as, the processors or processing circuitry 42 in a vehicle control system, shown as control unit 38 in Figure 11, together with computer program code for performing the functions and actions of the embodiments of method 100 disclosed herein.

In Figure 11, the control system 38 includes an ADS 30, comprising sensing subsystem 32a, perception subsystem 32b, and a decision subsystem 32c, receives sensory data and other data such as environmental and location data and processes this to implement an embodiment of method 100. After implementing method 100, the ADS sends the tactical decision data to the control system for processing and generation of any appropriate actuator signals to control the vehicle operation. The ADS 30 is shown in Figure 11 as being part of the control system 30, in other words some of the support components and functionality used by the ADS are also used by the control system 38. In other embodiments, however, the ADS may be separate from the control system 38 in the sense that it uses separate support components and functionality, in which case a suitable data interface may be provided between the ADS 30 and the control system 38 so that the information about any tactical decisions made by the ADS 30 can be send to the control system 38 for further processing and, if appropriate, to cause the generation of actuator signals to control the vehicle operation.

As mentioned briefly above, the program code mentioned above may also be provided as a computer program product, for instance in the form of a data carrier carrying computer program code or code means for performing the embodiments herein when being loaded into the processors or processing circuitry 42 in the control unit 38.

The data carrier, or computer readable medium, may be one of an electronic signal, optical signal, radio signal or computer-readable storage medium. The computer program code may e.g. be provided as pure program code in the control unit 38 or on a server and downloaded to the control unit 38.

Thus, it should be noted that the functions of the control unit 38 may in some embodiments be implemented as computer programs stored in memory 44, for example, a computer readable storage unit, for execution by processors or processing modules, e.g. the processing circuitry 42 in the control unit 38 of Figure 11.

To perform the method actions for operating an autonomous vehicle 10, the control unit 38 may the features shown in the schematic block diagram of Figure 11, where the control unit 38 is arranged to communicate via at least one antenna 40. It should also be noted that, although not shown in Figure 11, known conventional features of a control unit 38, such as, for example, a connection to a power source, e.g. a battery, or connections to brake or steering systems, e.g. on-board actuators or sensors for controlling the movement of the vehicle 12, may be assumed to be comprised in the control unit 38, but are not shown or described in any further detail in regards to Fig. 4. The control unit 38 may comprise as mentioned above, processing circuitry 42 and a memory 44. It should also be noted that some or all of the functionality described in the embodiments above as being performed by the control unit 38 may be provided by the processing circuitry 42 executing instructions stored on a computer-readable medium, such as, e.g. the memory 44 shown in Figure 11.

Alternative embodiments of the control unit 68 may comprise additional components, such as, for example, at least a determining module 46, a re-evaluation module 48, and an operating system module 50, whereby each module may be configured and responsible for providing its dedicated functionality to support the embodiments described herein. These modules may be used by the control system alone or shared with the vehicles ADS in some embodiments.

Where the control unit 38 and/or processing circuitry 42 includes components configured to or configurable to provide an ADS, those components may include the determining module 46 determining 114 there are no safe trajectories responsive to an occurrence of an unexpected event, and responsive to an occurrence of an unexpected event, the re-evaluation module 48 dynamically reevaluating 116 whether a current trajectory meets a current set of safety criteria, as well as the determining module 46 or another determining module determining the current path of the re-evaluated trajectory is to be maintained with the vehicle so that the vehicle can have predictable behavior. The determining module 46 or another module may perform this by removing one or more consequences of the occurrence of the event from the safety criteria used to re-evaluate the current trajectory whilst maintaining all other previous safety criteria.

Accordingly, in some embodiments where the control unit 38 and/or processing circuitry 42 comprises the ADS 30, the method 100 is executed by the vehicle ADS 30 at run time, and the all other previous safety criteria comprise safety criteria from a previous ADS run-time epoch to the current ADS run-time epoch.

The one or more of the consequences of the occurrence of the event may be pre-determined off-line and/or dynamically assess on-board the vehicle in some embodiments.

In some embodiments, the pre-determined one or more consequences are associated with a set of one or more predicted outcomes for a type of the unexpected event. The set of predicted outcomes are associated with a set of rules for maintaining or changing the current trajectory in some embodiments.

In some embodiments, the control unit 38 or processing circuitry 42 is configured to remove the one or more consequences of the event when re-evaluating the safety criteria by using the set of rules associated with safe outcomes of the set of one or more predicted outcomes determined from information about the current trajectory in a previous instance of the ADS run-time.

In some embodiments, responsive to determining there are no safe trajectories, the method further comprises the control unit 38 or processing circuitry 42 reducing in run-time an available set of control options for the ADS of the vehicle to an allowed set of options for the ADS to exercise to control the vehicle towards a predicted outcome. In some embodiments, exercising the reduced set of available control options causes the vehicle to continue along the current trajectory with different predictable behaviour to predicted behaviour prior to the unexpected event. The different predicted behaviour may include behaviour predicted to slow the vehicle speed. For example, the different predicted behaviour may include one or more of breaking, slowing the engine by engaging a lower gear, and swerving from side to side.

In some embodiments, the control unit 38 or processing circuitry 42 is configured to re-evaluate the trajectory against subsequent safety criteria in a subsequent ADS run-time epoch results in the trajectory meeting the subsequent safety criteria. The event may be a type of isolated unexpected event.

In some embodiments, ADS 30 of the the control unit 38 or processing circuitry 42 is configured to send instructions to a control unit of the vehicle responsive determining the current re-evaluated trajectory is to be maintained with the vehicle have a predictable behaviour.

Those skilled in the art will also appreciate that the processing circuitry 42 and the memory or computer readable storage unit 44 described above may refer to a combination of analog and digital circuits, and/or one or more processors configured with software and/or firmware, e.g. stored in a memory, that when executed by the one or more processors such as the processing circuitry 44 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The control unit 38 also comprises or is capable of controlling how signals are sent wirelessly via antenna 40 in order for the vehicle 12 to communicate via one or more communications channels with remote entities, for example, a site back office.

The communication channels may be point-to-point, or networks, for example, over cellular or satellite networks which support wireless communications. The wireless communications may conform to one or more public or proprietary communications standards, protocols and/or technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), and/or Instant Messaging and Presence Service (IMPS)), and/or Short Message Service (SMS)), or any other suitable communication protocol, including communication protocols not yet developed as of the filing date of this document.

The operating system of the vehicle may further various software components and/or drivers for controlling and managing general system tasks (e.g., memory management, storage device control, power management, etc.) and facilitates communication between various hardware and software components in addition to operating software module 50.

Where the disclosed technology is described with reference to drawings in the form of block diagrams and/or flowcharts, it is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

The description of the example embodiments provided herein have been presented for the purposes of illustration. The description is not intended to be exhaustive and modifications and variations to the described example embodiments will be apparent to one skilled in the art. Features of one of the embodiments described herein may be combined with features from other example embodiments described herein of methods, apparatus, modules, systems, and computer program products.

It should be noted that the word "comprising" does not necessarily exclude the presence of other elements, features, functions, or steps than those listed and the words "a" or "an" preceding an element do not exclude the presence of a plurality of such elements, features, functions, or steps. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of methods, and may refer to elements, functions, steps or processes, one or more or all of which may be implemented in one aspect by a computer program product, embodied in a computer-readable medium, including computer-executable instructions, such as program code, executed by computers in networked environments.

A computer-readable medium may include removable and non-removable storage devices including, but not limited to, Read Only Memory (ROM), Random Access Memory, RAM), which may be static RAM, SRAM, or dynamic RAM, DRAM. ROM may be programmable ROM, PROM, or EPROM, erasable programmable ROM, or electrically erasable programmable ROM, EEPROM. Suitable storage components for memory may be integrated as chips into a printed circuit board or other substrate connected with one or more processors or processing modules, or provided as removable components, for example, by flash memory (also known as USB sticks), compact discs (CDs), digital versatile discs (DVD), and any other suitable forms of memory. Unless not suitable for the application at hand, memory may also be distributed over a various forms of memory and storage components, and may be provided remotely on a server or servers, such as may be provided by a cloud-based storage solution. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The memory used by any apparatus whatever its form of electronic apparatus described herein accordingly comprise any suitable device readable and/or writeable medium, examples of which include, but are not limited to: any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry. Memory may store any suitable instructions, data or information, including a computer program, software, an application including one or more of logic, rules, code, tables, etc. and/or other instructions capable of being executed by processing circuitry and, utilized by the apparatus in whatever form of electronic apparatus. Memory may be used to store any calculations made by processing circuitry and/or any data received via a user or communications or other type of data interface. In some embodiments, processing circuitry and memory are integrated. Memory may be also dispersed amongst one or more system or apparatus components. For example, memory may comprises a plurality of different memory modules, including modules located on other network nodes in some embodiments.

In the drawings and specification, there have been disclosed exemplary aspects of the disclosure. However, many variations and modifications can be made to these aspects which fall within the scope of the accompanying claims. Thus, the disclosure should be regarded as illustrative rather than restrictive in terms of supporting the claim scope which is not to be limited to the particular examples of the aspects and embodiments described above. The invention which is exemplified herein by the various aspects and embodiments described above has a scope which is defined by the following claims.

## Claims

1. A computer-implemented method (100) of controlling a vehicle to have predictable behaviour, the method comprising an automated driver system, ADS, (30) of the vehicle performing:
determining there are no safe trajectories responsive to an occurrence of an unexpected event (114); and
responsive to the determination, dynamically re-evaluating whether a current trajectory meets a current set of safety criteria (116);
determining the current path of the re-evaluated trajectory is to be maintained with the vehicle so that the vehicle can have predictable behaviour by removing one or more consequences of the occurrence of the event from the safety criteria used to re-evaluate the current trajectory whilst maintaining all other previous safety criteria.

2. The method (100) of claim 1, wherein the method is executed by the vehicle ADS at run time, and the all other previous safety criteria comprise safety criteria from a previous ADS run-time epoch to the current ADS run-time epoch.

3. The method (100) of claim 1 or 2, wherein the one or more of the consequences of the occurrence of the event are pre-determined off-line.

4. The method of claim 1, wherein the pre-determined one or more consequences are associated with a set of one or more predicted outcomes for a type of the unexpected event.

5. The method of claim 4, wherein the set of predicted outcomes are associated with a set of rules for maintaining or changing the current trajectory.

6. The method of claim 5, wherein, removing the one or more consequences of the event when re-evaluating the safety criteria comprises using the set of rules associated with safe outcomes of the set of one or more predicted outcomes determined from information about the current trajectory in a previous instance of the ADS run-time.

7. The method of any one of previous claims 1 to 6, wherein responsive to determining there are no safe trajectories, the method further comprises the ADS reducing in run-time an available set of control options for a control system (38) of the vehicle (10) to an allowed set of options for the control system (38) to exercise to control the vehicle (10) towards a predicted outcome.

8. The method of claim 7, wherein exercising the reduced set of available control options causes the vehicle (10) to continue along the current trajectory path with different predictable behaviour to predicted behaviour prior to the unexpected event.

9. The method of claim 8, wherein the different predicted behaviour includes behaviour predicted to slow vehicle speed, the different predicted behaviour comprising one or more of:
breaking; and
slowing the engine by engaging a lower gear.

10. The method (100) of any one of previous claims 7 to 9, wherein the ADS is configured to generate information, responsive to which the control system generates actuator signals to operate the vehicle.

11. The method (100) of claim 8 or 9, wherein re-evaluating the trajectory against subsequent safety criteria in a subsequent ADS run-time epoch results in the trajectory meeting the subsequent safety criteria.

12. The method (100) of any previous claim, wherein the event is a type of isolated unexpected event.

13. A control system (38) of a vehicle (10) including an automated driving system, ADS, (30), the control system (38) comprising:
memory (44);
computer program code; and
one or more processors and/or processing circuitry (42),wherein the computer program code, when loaded from the memory (44) and executed by the one or more processors and/or processing circuitry (42), causes the control system to perform a method according to any one of claims 1 to 12.

14. A vehicle configured with a control system according to claim 13.

15. A computer program product comprising a computer-readable storage medium, wherein the computer-readable storage medium includes computer code, which when loaded and executed by one or more processors and/or processing circuitry (42) of a control system (38) of a vehicle (10), causes the control system (38) to be configured to maintain predictable behaviour of the vehicle by performing a method according to any one of claims 1 to 12.

## Patentansprüche

1. Computerimplementiertes Verfahren (100) zum Steuern eines Fahrzeugs für vorhersagbares Verhalten, wobei das Verfahren ein automatisiertes Fahrersystem, ADS, (30) des Fahrzeugs umfasst, das Folgendes durchführt:
Bestimmen, dass es keine sicheren Fahrstrecken gibt, als Reaktion auf ein Auftreten eines unerwarteten Ereignisses (114); und
als Reaktion auf das Bestimmen, dynamisches Neubewerten, ob eine aktuelle Fahrstrecke einen aktuellen Satz von Sicherheitskriterien (116) erfüllt;
Bestimmen, dass der aktuelle Verlauf der neubewerteten Fahrstrecke mit dem Fahrzeug beizubehalten ist, damit das Fahrzeug ein vorhersagbares Verhalten aufweisen kann, indem eine oder mehrere Konsequenzen des Auftretens des Ereignisses aus den Sicherheitskriterien, die zum Neubewerten der aktuellen Fahrstrecke verwendet werden, entfernt werden, während alle anderen vorhergehenden Sicherheitskriterien beibehalten werden.

2. Verfahren (100) nach Anspruch 1, wobei das Verfahren durch das Fahrzeug-ADS während einer Betriebszeit ausgeführt wird, und alle anderen vorhergehenden Sicherheitskriterien Sicherheitskriterien von einem vorhergehenden ADS-Betriebszeitraum bis zu dem aktuellen ADS-Betriebszeitraum umfassen.

3. Verfahren (100) nach Anspruch 1 oder 2, wobei die eine oder die mehreren der Konsequenzen des Auftretens des Ereignisses offline vorbestimmt werden.

4. Verfahren nach Anspruch 1, wobei die vorbestimmte eine oder die vorbestimmten mehreren Konsequenzen mit einem Satz von einem oder mehreren vorhergesagten Ergebnissen für einen Typ des unerwarteten Ereignisses verknüpft sind.

5. Verfahren nach Anspruch 4, wobei der Satz von vorhergesagten Ergebnissen mit einem Satz von Regeln zum Beibehalten oder Ändern der aktuellen Fahrstrecke verknüpft ist.

6. Verfahren nach Anspruch 5, wobei das Entfernen der einen oder der mehreren Konsequenzen des Ereignisses beim Neubewerten der Sicherheitskriterien Verwenden des Satzes von Regeln umfasst, der mit sicheren Ergebnissen des Satzes von einem oder mehreren vorhergesagten Ergebnissen verknüpft ist, die aus Informationen über die aktuelle Fahrstrecke in einer vorhergehenden Instanz der ADS-Betriebszeit bestimmt wurden.

7. Verfahren nach einem der vorhergehenden Ansprüche 1 bis 6, wobei das Verfahren als Reaktion auf das Bestimmen, dass es keine sicheren Fahrstrecken gibt, ferner umfasst, dass das ADS während der Betriebszeit einen verfügbaren Satz von Steueroptionen für ein Steuersystem (38) des Fahrzeugs (10) auf einen zulässigen Satz von Optionen reduziert, die das Steuersystem (38) umsetzen kann, um das Fahrzeug (10) in Richtung eines vorhergesagten Ergebnisses zu steuern.

8. Verfahren nach Anspruch 7, wobei das Umsetzen des reduzierten Satzes von verfügbaren Steueroptionen das Fahrzeug (10) dazu veranlasst, dem aktuellen Fahrstreckenverlauf mit einem anderen vorhersagbaren Verhalten als dem vorhergesagten Verhalten vor dem unerwarteten Ereignis weiterhin zu folgen.

9. Verfahren nach Anspruch 8, wobei das andere vorhergesagte Verhalten ein Verhalten beinhaltet, bei dem ein Verlangsamen der Fahrzeuggeschwindigkeit vorhergesagt wird, wobei das andere vorhergesagte Verhalten eines oder mehrere der Folgenden umfasst:
Bremsen; und
Verlangsamen des Motors durch Einlegen eines niedrigeren Ganges.

10. Verfahren (100) nach einem der vorhergehenden Ansprüche 7 bis 9, wobei das ADS dazu konfiguriert ist, Informationen zu erzeugen, als Reaktion auf die das Steuersystem Aktorsignale zum Betreiben des Fahrzeugs erzeugt.

11. Verfahren (100) nach Anspruch 8 oder 9, wobei das Neubewerten der Fahrstrecke anhand nachfolgender Sicherheitskriterien in einem nachfolgenden ADS-Betriebszeitraum dazu führt, dass die Fahrstrecke die nachfolgenden Sicherheitskriterien erfüllt.

12. Verfahren (100) nach einem der vorhergehenden Ansprüche, wobei es sich bei dem Ereignis um eine Art isoliertes unerwartetes Ereignis handelt.

13. Steuersystem (38) eines Fahrzeugs (10), das ein automatisiertes Fahrsystem, ADS, (30) beinhaltet, wobei das Steuersystem (38) Folgendes umfasst:
einen Speicher (44);
einen Computerprogrammcode; und
einen oder mehrere Prozessoren und/oder Verarbeitungsschaltkreise (42), wobei der Computerprogrammcode, wenn er aus dem Speicher (44) geladen wird und durch den einen oder die mehreren Prozessoren und/oder Verarbeitungsschaltkreise (42) ausgeführt wird, das Steuersystem dazu veranlasst, ein Verfahren nach einem der Ansprüche 1 bis 12 durchzuführen.

14. Fahrzeug, das mit einem Steuersystem nach Anspruch 13 konfiguriert ist.

15. Computerprogrammprodukt, umfassend ein computerlesbares Speichermedium, wobei das computerlesbare Speichermedium einen Computercode beinhaltet, der, wenn er durch einen oder mehrere Prozessoren und/oder Verarbeitungsschaltkreise (42) eines Steuersystems (38) eines Fahrzeugs (10) geladen und ausgeführt wird, das Steuersystem (38) dazu veranlasst, dazu konfiguriert zu sein, durch Durchführen eines Verfahrens nach einem der Ansprüche 1 bis 12 ein vorhersagbares Verhalten des Fahrzeugs beizubehalten.

## Revendications

1. Procédé mis en œuvre par ordinateur (100) permettant de commander un véhicule pour avoir un comportement prévisible, le procédé comprenant un système de conduite automatisé, ADS, (30) du véhicule réalisant :
la détermination de l'absence de trajectoires sécurisées en réponse à la survenue d'un événement inattendu (114) ; et
en réponse à la détermination, la réévaluation dynamique qu'une trajectoire actuelle répond à un ensemble actuel de critères de sécurité (116) ;
la détermination du trajet actuel de la trajectoire réévaluée doit être maintenue avec le véhicule de sorte que le véhicule puisse avoir un comportement prévisible en supprimant une ou plusieurs conséquences de la survenue de l'événement des critères de sécurité utilisés pour réévaluer la trajectoire actuelle tout en conservant tous les autres critères de sécurité précédents.

2. Procédé (100) selon la revendication 1, dans lequel le procédé est exécuté par l'ADS du véhicule au moment de l'exécution, et tous les autres critères de sécurité précédents comprennent des critères de sécurité d'une époque d'exécution ADS précédente à l'époque d'exécution ADS actuelle.

3. Procédé (100) selon la revendication 1 ou 2, dans lequel l'une ou plusieurs conséquences de l'occurrence de l'événement sont prédéterminées hors ligne.

4. Procédé selon la revendication 1, dans lequel l'une ou plusieurs conséquences prédéterminées sont associées à un ensemble d'un ou plusieurs résultats prédits pour un type d'événement inattendu.

5. Procédé selon la revendication 4, dans lequel l'ensemble de résultats prédits est associé à un ensemble de règles pour maintenir ou modifier la trajectoire actuelle.

6. Procédé selon la revendication 5, dans lequel la suppression de l'une ou plusieurs conséquences de l'événement lors de la réévaluation des critères de sécurité comprend l'utilisation de l'ensemble de règles associées à des résultats sécurisés de l'ensemble d'un ou plusieurs résultats prédits déterminés à partir d'informations sur la trajectoire actuelle dans une instance précédente du temps d'exécution ADS.

7. Procédé selon l'une quelconque des revendications précédentes 1 à 6, dans lequel, en réponse à la détermination qu'il n'existe aucune trajectoire sécurisée, le procédé comprend en outre la réduction par l'ADS, en temps d'exécution, d'un ensemble disponible d'options de commande pour un système de commande (38) du véhicule (10) à un ensemble autorisé d'options que le système de commande (38) doit exercer pour commander le véhicule (10) vers un résultat prédit.

8. Procédé selon la revendication 7, dans lequel l'exercice de l'ensemble réduit d'options de commande disponibles amène le véhicule (10) à continuer le long de la trajectoire actuelle avec un comportement prévisible différent du comportement prévu avant l'événement inattendu.

9. Procédé selon la revendication 8, dans lequel le comportement prévu différent comprend un comportement prévu pour ralentir la vitesse du véhicule, le comportement prévu différent comprenant un ou plusieurs éléments parmi :
le freinage ; et
le ralentissement du moteur en engageant une vitesse inférieure.

10. Procédé (100) selon l'une quelconque des revendications précédentes 7 à 9, dans lequel l'ADS est configuré pour générer des informations, en réponse auxquelles le système de commande génère des signaux d'actionneur pour faire fonctionner le véhicule.

11. Procédé (100) selon la revendication 8 ou 9, dans lequel la réévaluation de la trajectoire par rapport à des critères de sécurité ultérieurs dans une époque d'exécution ADS ultérieure conduit à ce que la trajectoire réponde aux critères de sécurité ultérieurs.

12. Procédé (100) selon l'une quelconque des revendications précédentes, dans lequel l'événement est un type d'événement inattendu isolé.

13. Système de commande (38) d'un véhicule (10) comprenant un système de conduite automatisé, ADS, (30), le système de commande (38) comprenant :
une mémoire (44) ;
un code de programme informatique ; et
un ou plusieurs processeurs et/ou circuits de traitement (42), le code de programme informatique, lorsqu'il est chargé à partir de la mémoire (44) et exécuté par l'un ou plusieurs processeurs et/ou circuits de traitement (42), amenant le système de commande à exécuter un procédé selon l'une quelconque des revendications 1 à 12.

14. Véhicule configuré avec un système de commande selon la revendication 13.

15. Produit de programme informatique comprenant un support de stockage lisible par ordinateur, le support de stockage lisible par ordinateur comprenant un code informatique qui, lorsqu'il est chargé et exécuté par un ou plusieurs processeurs et/ou circuits de traitement (42) d'un système de commande (38) d'un véhicule (10), amène le système de commande (38) à être configuré pour maintenir un comportement prévisible du véhicule en exécutant un procédé selon l'une quelconque des revendications 1 à 12.
